# EUROPEAN PATENT APPLICATION

(11) **EP 4 513 733 A1**
(43) Date of publication of application: **26.02.2025**
(21) Application number: 22942545.9
(22) Date of filing: 29.12.2022
(51) Int. Cl.: H02M 1/32

(54) **OVERCURRENT PROTECTION CIRCUIT OF POWER SUPPLY SYSTEM, AND DEVICE**

(30) Priority: 16.05.2022 CN 202210528724
(71) Applicant: Huawei Digital Power Technologies Co., Ltd., Shenzhen, Guangdong 518043 (CN)
(72) Inventor: KANG, Junpeng, Shenzhen, Guangdong 518043 (CN); XIAO, Bo, Shenzhen, Guangdong 518043 (CN); YAO, Wenhai, Shenzhen, Guangdong 518043 (CN); HUANG, Zhuyong, Shenzhen, Guangdong 518043 (CN)
(74) Representative: Maiwald GmbH
(86) International application number: PCT/CN2022/143367
(87) International publication number: WO 2023/221526

(57) **Abstract**

The present invention provides an overcurrent protection circuit of a power supply system and a power conversion apparatus. The circuit includes a transformer, a first sampling circuit, a second sampling circuit, a first processor, and a second processor. The first sampling circuit is configured to collect a current signal at an input terminal of the transformer. When a strength value of the current signal at the input terminal of the transformer is greater than a first threshold, the first processor triggers the protection circuit to stop sending a PWM driver gating signal to the power supply system. The second sampling circuit is configured to: collect an electrical signal at an output terminal of the power supply system and output a second sampling signal. The second processor is configured to: output a first signal based on the second sampling signal, and send, to the first processor, the first signal as a determining condition for subsequent sending of a PWM driver gating signal or shutdown. In other words, in embodiments of this application of the present invention, only one overcurrent protection hardware circuit needs to be disposed, so that when a fault occurs in the power supply system, a type of the fault can be identified, and corresponding protection can be performed. This improves reliability of the power supply system.

## Description

This application claims priority to Chinese Patent Application No. 202210528724.8, filed with the China National Intellectual Property Administration on May 16, 2022 and entitled "OVERCURRENT PROTECTION CIRCUIT OF POWER SUPPLY SYSTEM AND APPARATUS", which is incorporated herein by reference in its entirety.

### TECHNICAL FIELD

The present invention relates to the field of circuit system protection technologies, and in particular, to an overcurrent protection circuit of a power supply system and an apparatus.

### BACKGROUND

A power supply system with a power supply module having a transformer for isolation usually includes an overcurrent protection hardware (Over Current Protect, OCP) circuit OCP1 for limiting a current at a primary side of the transformer and an overcurrent protection hardware circuit OCP2 for limiting a current at a secondary side/output side of the transformer. When a voltage difference between the primary side and the secondary side of the transformer is low, an isolator with a short delay can be used to meet isolation communication requirements of the primary side and the secondary side. An isolation communication delay between the primary side and the secondary side of the transformer usually needs to be within 1 µs. When a fault occurs in the power supply system, a winding short circuit fault A of the transformer is identified based on the OCP1, and an output short circuit fault B or a large surge current fault B is identified based on the OCP2. After identifying the two different faults, the power supply system uses different protection logic for the different faults.

However, in an existing solution, in a scenario in which the communication delay between the primary side and the secondary side of the transformer is large (10 µs or even greater), there is a problem that the fault A and the fault B cannot be effectively identified. In other words, different logic protection cannot be effectively performed for different faults. Consequently, stability and reliability of the power supply system are reduced, and a high risk exists.

### SUMMARY

Embodiments of this application provide an overcurrent protection circuit of a power supply system and an apparatus, which have advantages such as high reliability, circuit simplification, low costs, and simple control manners.

According to a first aspect, an embodiment of this application provides an overcurrent protection circuit of a power supply system. The protection circuit includes a transformer, where an input terminal of the transformer is connected to an input terminal of the power supply system through a first power circuit, and an output terminal of the transformer is connected to an output terminal of the power supply system through a second power circuit; a first sampling circuit, configured to: collect a current signal at the input terminal of the transformer and output a first sampling signal; an overcurrent protection hardware circuit, configured to: determine strength of the first sampling signal, and when the strength of the first sampling signal is greater than a first threshold, output an overcurrent protection signal; a first processor, configured to trigger, based on the overcurrent protection signal, the power supply system to stop sending a PWM driver gating signal; a second sampling circuit, configured to: collect an electrical signal at an output terminal of the second power circuit and output a second sampling signal; and a second processor, configured to output a first signal, where the first signal includes the second sampling signal; or configured to: determine strength of the second sampling signal and output a first signal, where the first signal includes first information and the second sampling signal, and the first information indicates whether an output overcurrent occurs at the output terminal of the power supply system. After the power supply system stops sending a PWM driver gating signal, the first processor is further configured to receive the first signal, and when the received first signal is within a first time threshold, the first processor determines, based on the first signal, whether to perform overcurrent protection on the output terminal of the power supply system.

In the foregoing solution, a PWM driver gating signal is first stopped sending based on the current signal collected at the input terminal of the power supply system. Then, within a specific time interval, whether the power supply system continues to send a PWM driver gating signal or is shut down subsequently is determined based on a current signal and/or a voltage signal collected at the output terminal of the power supply system. In this way, in a scenario in which a communication delay between a primary side and a secondary side of the transformer is large, faults of the primary side and the secondary side of the transformer can be effectively identified, and protection can be performed. Further, in this solution, overcurrent/short circuit fault protection of the primary side and of the secondary side of the transformer share one OCP point. In other words, in this application of the present invention, an OCP hardware protection circuit only needs to be disposed at the primary side of the transformer, so that when a fault occurs in the power supply system, a type of the fault can be identified, and corresponding protection can be performed. This improves reliability of the power supply system.

In a possible implementation, triggering the power supply system to stop sending a PWM driver gating signal includes: triggering the power supply system to cut off a transmission path of a power flow inside the power supply system. In a possible implementation, the second processor is configured to: when the second sampling signal is a current value, and the current value is greater than or equal to a second threshold, generate the first information, where the first information indicates that the output overcurrent occurs at the output terminal of the power supply system, or when the second sampling signal is a voltage value, and the voltage value is less than or equal to a third threshold, generate the first information, where the first information indicates that the output overcurrent occurs at the output terminal of the power supply system; and when the second sampling signal is a current value, and the current value is less than the second threshold, generate the first information, where the first information indicates that the output overcurrent does not occur at the output terminal of the power supply system, or when the second sampling signal is a voltage value, and the voltage value is greater than the third threshold, generate the first information, where the first information indicates that the output overcurrent does not occur at the output terminal of the power supply system.

In other words, after receiving the second sampling signal, the second processor may predetermine the second sampling signal, and use the first information to represent a determining result. In this way, after receiving the first signal, the first processor can directly trigger, based on the first information, the power supply system to enter a corresponding protection action.

In a possible implementation, determining, based on the first signal, whether to perform overcurrent protection on the output terminal of the power supply system includes: determining, based on the first information carried in the first signal, whether to perform overcurrent protection on the output terminal of the power supply system; or determining, based on the signal strength of the second sampling signal carried in the first signal, whether to perform overcurrent protection on the output terminal of the power supply system.

In other words, after receiving the first signal, the first processor may determine, in two manners, whether to perform overcurrent protection on the output terminal of the power supply system. When it is preset that the second sampling signal is determined by the second processor, after receiving the first signal, the first processor can directly determine, based on the first information carried in the first signal, whether to perform overcurrent protection on the output terminal of the power supply system. When it is preset that the second sampling signal is determined by the first processor, after receiving the first signal, the first processor can determine, based on the signal strength of the second sampling signal carried in the first signal, whether to perform overcurrent protection on the output terminal of the power supply system.

In a possible implementation, the determining, based on the first information carried in the first signal, whether to perform overcurrent protection on the output terminal of the power supply system includes: When the first information carried in the first signal indicates that the output overcurrent occurs at the output terminal of the power supply system, the first processor performs overcurrent protection on the output terminal of the power supply system; or when the first information carried in the first signal indicates that the output overcurrent does not occur at the output terminal of the power supply system, the first processor determines that a winding short circuit fault occurs in the power supply system, triggers the power supply system to be shut down, and reports the fault.

In other words, if it is preset that the second sampling signal is determined by the second processor, the first signal output by the second processor carries the first information. When the first information indicates whether the output overcurrent occurs at the output terminal of the power supply system, the first processor can directly determine, based on the first information, whether overcurrent protection needs to be performed on the output terminal of the power supply system.

In a possible implementation, the determining, based on the signal strength of the second sampling signal carried in the first signal, whether to perform overcurrent protection on the output terminal of the power supply system includes: The first processor determines the second sampling signal, and when the second sampling signal is the current value, and the current value is greater than or equal to the second threshold, or when the second sampling signal is the voltage value, and the voltage value is less than or equal to the third threshold, the first processor performs overcurrent protection on the output terminal of the power supply system; or when the second sampling signal is the current value, and the current value is less than the second threshold, or when the second sampling signal is the voltage value, and the voltage value is greater than the third threshold, the first processor determines that a winding short circuit fault occurs in the power supply system, triggers the power supply system to be shut down, and reports the fault.

In other words, if it is predetermined that the first processor determines the second sampling signal, after the first processor receives the first signal, the first processor directly determines the signal strength of the second sampling signal, to determine whether overcurrent protection needs to be performed on the output terminal of the power supply system.

In a possible implementation, determining, based on the first signal, whether to perform overcurrent protection on the output terminal of the power supply system includes: determining whether the first signal includes the first information. On a basis that the first signal does not include the first information, the first processor determines, based on the signal strength of the second sampling signal carried in the first signal, whether to perform overcurrent protection on the output terminal of the power supply system; or on a basis that the first signal includes the first information, and the first information indicates that the output overcurrent occurs at the output terminal of the power supply system, the first processor performs overcurrent protection on the output terminal of the power supply system; or on a basis that the first signal includes the first information, and the first information indicates that the output overcurrent does not occur at the output terminal of the power supply system, the first processor determines that a winding short circuit fault occurs in the power supply system, triggers the power supply system to be shut down, and reports the fault.

In other words, if it is not predetermined that which processor determines the second sampling signal collected at the output terminal, after receiving the first signal, the first processor first determines whether the first signal includes the first information. If the first signal includes the first information, it indicates that the second processor has determined the second sampling signal. In this case, the first processor only needs to perform a corresponding operation based on a determining result (the first information) of the second processor. If the first signal does not include the first information, it indicates that the second processor does not determine the second sampling signal. In this case, the first processor needs to determine the second sampling signal carried in the first signal and perform a corresponding operation based on a determining result.

In a possible implementation, the first processor is further configured to: determine whether the first signal is received within a second time threshold. On a basis that the first processor does not receive the first signal within the second time threshold, the first processor determines that a communication fault occurs in the power supply system, triggers the power supply system to be shut down, and reports the fault.

In other words, the second time threshold is preset. When the first processor does not receive the first signal within the second time threshold, it may be determined that communication between the first processor and the second processor is interrupted. In this case, the first processor triggers the power supply system to be shut down and reports the fault.

In a possible implementation, the circuit further includes a third sampling circuit. When the second sampling circuit is a current sampling circuit, the third sampling circuit is a voltage sampling circuit. The third sampling circuit is configured to: collect a voltage at the output terminal of the second power circuit and output a third sampling signal.

In other words, a sampling circuit is added to the output terminal of the power supply system, to improve accuracy of determining a fault of the output terminal of the power supply system.

In a possible implementation, the second processor is further configured to: output the first signal based on the second sampling signal and the third sampling signal, where the first signal includes the second sampling signal and the third sampling signal; or determine the signal strength of the second sampling signal and signal strength of the third sampling signal, and output the first signal, where the first signal includes the first information, the second sampling signal, and the third sampling signal, and the first information indicates whether the output overcurrent occurs at the output terminal of the power supply system; and when a current value collected by the second sampling circuit is greater than or equal to a second threshold, and a voltage value collected by the third sampling circuit is less than or equal to a third threshold, generate the first information, where the first information indicates that the output overcurrent occurs at the output terminal of the power supply system; when a current value collected by the second sampling circuit is less than a second threshold, generate the first information, where the first information indicates that the output overcurrent does not occur at the output terminal of the power supply system; or when a voltage value collected by the third sampling circuit is greater than a third threshold, generate the first information, where the first information indicates that the output overcurrent does not occur at the output terminal of the power supply system.

In other words, a current signal collected by the second sampling circuit and a voltage signal collected by the third sampling circuit are determined simultaneously. When both the collected current signal and the collected voltage signal are abnormal, it is determined that an overcurrent/short circuit fault occurs at the output terminal of the power supply system. The collected current signal and the collected voltage signal are determined simultaneously. This improves the accuracy of determining a fault of the output terminal of the power supply system.

In a possible implementation, the transformer is an isolation transformer.

According to a second aspect, an embodiment of this application of the present invention further provides a power conversion apparatus. The power conversion apparatus includes a power supply and an overcurrent protection circuit. The overcurrent protection circuit is the overcurrent protection circuit in the first aspect. The power supply is configured to supply power to the overcurrent protection circuit.

### BRIEF DESCRIPTION OF DRAWINGS

To describe technical solutions in embodiments of the present invention more clearly, the following briefly describes the accompanying drawings for describing embodiments. It is clear that the accompanying drawings in the following descriptions show merely some embodiments of the present invention, and a person of ordinary skill in the art may still derive another drawing from these accompanying drawings without creative efforts.
FIG. 1 is a schematic diagram of an overcurrent protection circuit of an existing power supply system;
FIG. 2 is a diagram of a time sequence after a fault occurs in an existing power supply system;
FIG. 3 is a schematic diagram of a structure of an overcurrent protection circuit of a power supply system according to an embodiment of this application;
FIG. 4a is a schematic diagram of a structure of an overcurrent protection circuit of another power supply system according to an embodiment of this application;
FIG. 4b is a schematic diagram of a structure of an overcurrent protection circuit of another power supply system according to an embodiment of this application;
FIG. 5 is a schematic diagram of a structure of an overcurrent protection circuit of another power supply system according to an embodiment of this application;
FIG. 6 is a diagram of a time sequence of an overcurrent protection circuit of a power supply system according to an embodiment of this application; and
FIG. 7 is a flowchart of an overcurrent protection method for a power supply system according to an embodiment of this application.

### DESCRIPTION OF EMBODIMENTS

To make objectives, technical solutions, and advantages of embodiments of this application clearer, the following describes the technical solutions in embodiments of this application with reference to the accompanying drawings.

In the descriptions of embodiments of this application, any embodiment or design scheme described with an expression "example", "for example", or "in an example" should not be understood as being more preferred or having more advantages than another embodiment or design scheme. To be precise, use of the expression such as "example", "for example", or "in an example" is intended to present a related concept in a specific manner.

In addition, terms "first" and "second" are merely intended for a purpose of description, and shall not be understood as an indication or implication of relative importance or an implicit indication of indicated technical features. Therefore, a feature limited by "first" or "second" may explicitly or implicitly include one or more features. The terms "include", "comprise", and "have", and variants thereof all mean "include but are not limited to", unless otherwise specifically emphasized in another manner.

Before this solution is described, terms that need to be used in this solution are first described.

Power conversion apparatus: is an electronic apparatus for converting power, and usually includes power conversion of an input part and power conversion of an output part. For example, an alternating current input is converted into a direct current output by using the power conversion apparatus.

Overcurrent protection (Over Current Protect, OCP): When a current exceeds a protection threshold, a corresponding protection action is performed, to prevent the power conversion apparatus from failing.

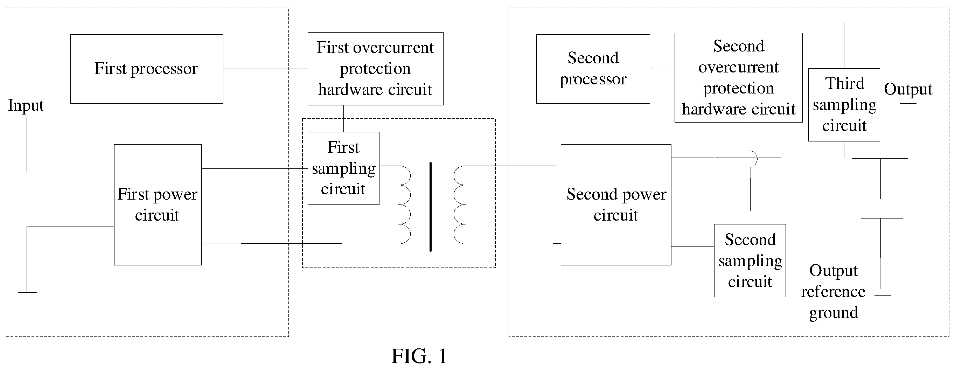

To detect a fault of a power supply system, in solution 1 shown in FIG. 1, a first sampling circuit and a first overcurrent protection hardware circuit are disposed at a primary side of a transformer; and a second sampling circuit, a third sampling circuit, and a second overcurrent protection hardware circuit are disposed at an output terminal of a second power circuit.

A current or a voltage collected by the first sampling circuit is reported to a first processor. When the current or the voltage collected by the first sampling circuit exceeds a first protection threshold, the first processor determines that a winding short circuit occurs at the primary side or a secondary side of the transformer. In this case, the first processor triggers the first overcurrent protection hardware circuit to perform drive blocking protection (perform OCP1 protection) on the power supply system. Further, the first processor triggers the power supply system to be shut down and reports the fault.

The second sampling circuit and the third sampling circuit report collected currents or voltages to a second processor. When the current, in a circuit, collected by the second sampling circuit exceeds a second protection threshold or the voltage collected by the second sampling circuit is less than a third protection threshold, or the current collected by the third sampling circuit exceeds a second protection threshold or the voltage collected by the third sampling circuit is less than a third protection threshold, the second processor determines that a short circuit occurs at an output terminal of the power supply system or a surge current is output. The second processor triggers the second overcurrent protection hardware circuit to perform protection (OCP2 protection). Specifically, after a signal indicating stopping sending a PWM driver gating signal is transferred to the primary side of the transformer through the second overcurrent protection hardware circuit, driving of the primary side of the transformer is blocked, and a PWM driver gating signal is sent again at a fixed interval. If OCP2 protection is triggered several consecutive times, the power supply system reports the fault and is shut down and locked.

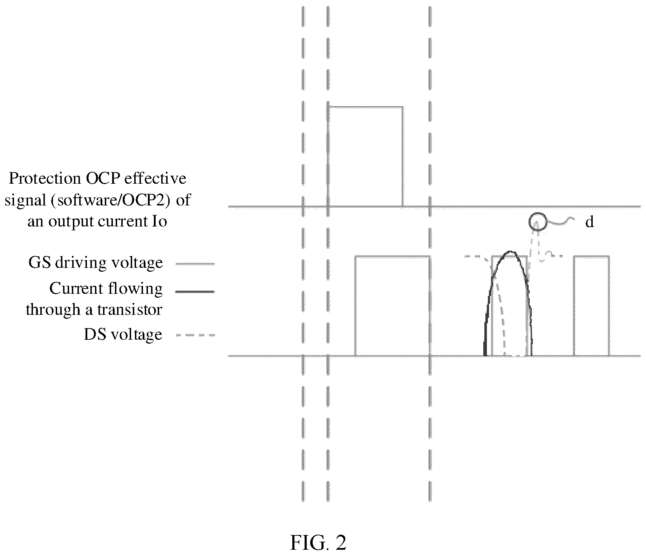

In the solution shown in FIG. 1, the overcurrent protection hardware circuits (the first overcurrent protection hardware circuit and the second overcurrent protection hardware circuit) are disposed in both a circuit of the primary side and a circuit of the secondary side of the transformer. A communication delay between the circuit of the primary side and the circuit of the secondary side of the transformer needs to be controlled within 1 µs. The first overcurrent protection hardware circuit and the second overcurrent protection hardware circuit are configured to perform different logic protection. Therefore, a protection threshold of the first overcurrent protection hardware circuit is set to be higher than a protection threshold of the second overcurrent protection hardware circuit, to ensure that the first overcurrent protection hardware circuit is not triggered when the second overcurrent protection hardware circuit is triggered. However, the foregoing solution still has the following disadvantages.
1. The foregoing solution is not applicable to a scenario in which a delay is large. In a scenario in which the communication delay between the primary side and the secondary side of the transformer is large, the second overcurrent protection hardware circuit cannot be used at a short circuit of an output side.
   If the protection threshold of the second overcurrent protection hardware circuit is set to be low, the second overcurrent protection hardware circuit is easily triggered in a case such as an output overload. Consequently, product performance is affected. If the protection threshold of the second overcurrent protection hardware circuit is set to be high, in a case of an output short circuit, after the second overcurrent protection circuit is triggered, and the communication delay between the primary side and the secondary side of the transformer is considered, when stopping sending a PWM driver gating signal is performed on a transistor at the primary side of the transformer, a current is large, and there is high stress. This may cause a stress failure of the transistor, and the second overcurrent protection hardware circuit fails to provide a fault protection function.
2. Implementation of a hardware circuit in the foregoing solution is complex. Two overcurrent protection hardware circuits and two hardware overcurrent protection thresholds need to be used to identify different faults. If the protection threshold of the first overcurrent protection circuit and the protection threshold of the second overcurrent protection circuit are set to be the same, different faults cannot be distinguished. For example, when a fault of the output side is protected, the protection threshold of the first overcurrent protection hardware circuit is used to stop sending a PWM driver gating signal for protection. In this case, a power conversion apparatus cannot distinguish whether the fault is a winding short circuit of the primary side or the secondary side of the transformer or a short circuit of the output side, and cannot implement different protection measures for the fault. Further, as shown in FIG. 2, when the output terminal frequently performs load on-and-off, the first hardware overcurrent protection is easily triggered accidentally. After the winding short circuit occurs, and a PWM driver gating signal is stopped sending, a PWM driver gating signal continues to be sent within an interval td. As a result, stress of a MOS transistor in a first power circuit exceeds a specification, and a risk exists.

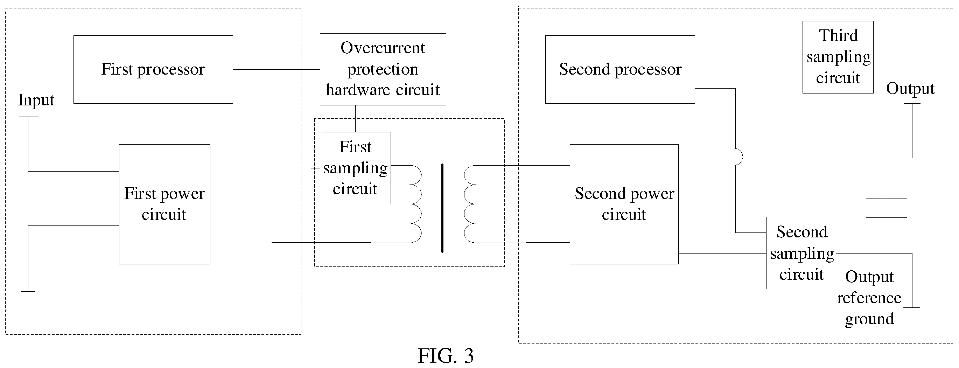

FIG. 3 is a schematic diagram of a structure of an overcurrent protection circuit of a power supply system according to an embodiment of this application of the present invention. As shown in FIG. 3, the circuit includes a first processor, a first power circuit, a first sampling circuit, an overcurrent protection hardware circuit (OCP), a transformer, a second power circuit, a second sampling circuit, a third sampling circuit, and a second processor.

One end of the first power circuit is connected to an input terminal of the power supply system, and the other end of the first power circuit is connected to one end of the transformer through the first sampling circuit. The other end of the transformer is connected to one end of the second power circuit. The other end of the second power circuit is connected to an output terminal of the power supply system. Further, the first sampling circuit is further connected to the first processor through the OCP circuit. The second sampling circuit and the third sampling circuit are respectively connected to the second processor and an output terminal of the second power circuit. The first processor communicates with the second processor in a high-voltage isolation high-speed communication manner. In a possible example, the transformer is an isolation transformer. The first processor and the second processor may be processors such as a main control chip, a control unit, a digital processor, an FPGA chip, or a combination of an MCU and an FPGA chip. In this embodiment of this application, after receiving a current value or a voltage value collected by each sampling circuit, a processor compares the received current value and the received voltage value with a preset threshold. The current value or the voltage value used for comparison may be an instantaneous value collected by a sampling circuit, or an effective value of current values/voltage values collected within a period of time, or an average value of current values/voltage values collected within a period of time. This is not limited in this embodiment of this application.

The first sampling circuit collects a current signal in a circuit of a primary side of the transformer in real time, and sends the collected current signal to the OCP circuit. The OCP circuit compares the received current signal with a preset reference current value (an overcurrent protection threshold of the OCP circuit). When a current value collected by the first sampling circuit is greater than the overcurrent protection threshold of the OCP circuit, the OCP circuit generates a corresponding OCP signal and sends the OCP signal to the first processor. The first processor determines that a fault occurs in the power supply system, and triggers the OCP circuit to stop sending a PWM driver gating signal to the power supply system. Stopping sending a PWM driver gating signal to the power supply system means that driving of a transistor in the power supply system is interrupted, and a transmission path of a power flow inside the power supply system is cut off. Then, the first processor continues to determine a fault type of the power supply system, and executes corresponding protection logic based on a determining result. In this embodiment of this application, there are two cases in which the current value collected by the first sampling circuit exceeds the protection threshold of the OCP circuit. In a first case, a winding short circuit/overcurrent occurs in the circuit of the primary side or a circuit of a secondary side of the transformer. In a second case, a short circuit/overcurrent occurs in a circuit of the output terminal of the power supply system.

For the first case, after the first processor triggers, based on the OCP signal, the power supply system to stop sending a PWM driver gating signal, the first processor continues to receive a signal. When the first processor receives, within a first time threshold, a first signal sent by the second processor, and determines, based on the first signal, that a current value at the output terminal is less than a preset current value, or a voltage value at the output terminal is greater than a preset voltage value, the first processor determines that the fault that occurs in the current power supply system is a winding short circuit/overcurrent that occurs at the primary side or the secondary side of the transformer. The first processor triggers the current power supply system to report the fault and be shut down and locked.

For the second case, an example in which the second sampling circuit is a current sampling circuit, and the third sampling circuit is a voltage sampling circuit is used for description. After the first processor triggers, based on the OCP signal, the power supply system to stop sending a PWM driver gating signal, the second processor outputs the first signal based on the current value and the voltage value that are collected at the output terminal. Specifically, the second processor compares the received current signal and the received voltage signal with a preset current threshold and a preset voltage threshold, and generates first information. The first information indicates whether an output overcurrent occurs at the output terminal of the power supply system. When a current value of a sampled current obtained by the second sampling circuit is greater than or equal to the preset current threshold, and a voltage value of a sampled voltage obtained by the third sampling circuit is less than or equal to the preset voltage threshold, the second processor generates the first information. The first information indicates that the output overcurrent occurs at the output terminal of the power supply system. Otherwise, the second processor outputs the first information for indication. Then, the second processor sends the first signal to the first processor. The first signal carries a second sampling signal, a third sampling signal, and the first information. Alternatively, after the second processor receives the current value and the voltage value that are collected at the output terminal, the second processor directly sends the first signal to the first processor. The first signal includes the current value and the voltage value.

In a possible example, the first information may be a flag bit. The flag bit may be 0 or 1. When the flag bit is 0, it indicates that the output overcurrent does not occur at the output terminal of the power supply system. When the flag bit is 1, it indicates that the output overcurrent occurs at the output terminal of the power supply system.

In a possible example, when an electrical signal at the output terminal of the power supply system is collected, two sampling circuits may be disposed at the output terminal of the power supply system, to simultaneously collect a current value and a voltage value at the output terminal of the power supply system. In addition, whether a short circuit or overcurrent fault occurs at the output terminal of the power supply system is determined based on the collected current value and the collected voltage value. Alternatively, only one sampling circuit may be disposed at the output terminal of the power supply system, to collect a current or a voltage at the output terminal of the power supply system. In addition, whether a short circuit or overcurrent fault occurs at the output terminal of the power supply system is determined based on the collected current value or the collected voltage value. It should be noted that, when determining a received sampling signal, the second processor may determine the collected electrical signal by using corresponding software, or may determine the collected electrical signal through a circuit inside the second processor, to generate a protection signal. A specific manner of determining the sampling signal by the second processor is not limited in this embodiment of this application of the present invention.

In a possible example, when the current and the voltage at the output terminal are sampled, one sampling circuit may be first triggered, and then, the other sampling circuit is triggered. A triggering time interval between the two sampling circuits is short.

The first processor receives the first signal sent by the second processor. When the received first signal is within the first time threshold, the first processor determines, based on the first signal, whether to trigger the power supply system to enter output short circuit/overcurrent protection logic. Specifically, when determining, based on the first signal received within the first time threshold, that the current value at the output terminal is greater than or equal to the preset current value, and the voltage value at the output terminal is less than or equal to the preset voltage value, the first processor triggers the power supply system to enter the short circuit/overcurrent protection logic of the output terminal. Otherwise, the first processor determines that a winding short circuit fault occurs in the power supply system, and the first processor triggers the power supply system to be shut down and reports the fault.

Further, there are three manners in which the first processor determines, based on the first signal received within the first time threshold, whether the current value at the output terminal is greater than or equal to the preset current value, and whether the voltage value at the output terminal is less than or equal to the preset voltage value.

Manner 1: It is preset that the second processor determines a signal collected by a sampling circuit of the output terminal. After receiving the first signal, the first processor determines first information carried in the first signal. When the first information carried in the first signal indicates that the output overcurrent occurs at the output terminal of the power supply system, the power supply system is triggered to enter the short circuit/overcurrent protection logic of the output terminal. When the first information carried in the first signal indicates that the output overcurrent does not occur at the output terminal of the power supply system, the first processor determines that the winding short circuit fault occurs in the power supply system, and the first processor triggers the power supply system to be shut down and reports the fault.

Manner 2: It is preset that the first processor determines an electrical signal collected at the output terminal. After receiving the first signal, the first processor determines a current value and a voltage value that are carried in the first signal. When the current value carried in the first signal is greater than or equal to the preset current value, and the voltage value carried in the first signal is less than or equal to the preset voltage value, the first processor triggers the power supply system to enter the short circuit/overcurrent protection logic of the output terminal. Otherwise, the first processor determines that the winding short circuit fault occurs in the power supply system, and the first processor triggers the power supply system to be shut down and reports the fault. In manner 2, a second processor with low configuration may be selected to save costs, or the second processor is omitted, and a communication circuit is selected to transfer current values and voltage values collected by the second sampling circuit and the third sampling circuit.

Manner 3: It is not required to preset which processor to determine the collected electrical signal. After the first processor receives the first signal within the first time threshold, the first processor first determines whether the first signal includes the first information. When the first signal carries the first information, and the first information indicates that the output overcurrent occurs at the output terminal of the power supply system, the first processor performs overcurrent protection on the output terminal of the power supply system. When the first signal carries the first information, and the first information indicates that the output overcurrent does not occur at the output terminal of the power supply system, the first processor determines that the winding short circuit fault occurs in the power supply system, triggers the power supply system to be shut down, and reports the fault. When the first signal does not carry the first information, the first processor performs determining based on the current value and the voltage value that are carried in the first signal. When the current value carried in the first signal is greater than or equal to the preset current value, and the voltage value carried in the first signal is less than or equal to the preset voltage value, the first processor triggers the power supply system to enter the short circuit/overcurrent protection logic of the output terminal. Otherwise, the first processor determines that the winding short circuit fault occurs in the power supply system, and the first processor triggers the power supply system to be shut down and reports the fault.

In a possible example, after the power supply system enters the output short circuit/overcurrent protection logic, the first processor triggers the power supply system to send a PWM driver gating signal for N times at a fixed time interval, where N is an integer greater than or equal to 1. If after each PWM driver gating signal is sent, the first processor can determine, based on the first signal received within the first time threshold, that the current value at the output terminal is greater than or equal to the preset current value, and the voltage value at the output terminal is less than or equal to the preset voltage value, the first processor determines that an output short circuit or overcurrent fault occurs at the output terminal of the power supply system, and the first processor triggers the power supply system to report the fault and be shut down and locked. If after a PWM driver gating signal is sent in a process of the N times of sending a PWM driver gating signal, the first processor determines, based on the received first signal, that the current value at the output terminal is less than the preset current value, or the voltage value at the output terminal is greater than the preset voltage value, the first processor determines that the winding short circuit fault occurs in the power supply system, and the first processor triggers the power supply system to be shut down and reports the fault. If after a PWM driver gating signal is sent in a process of the N times of sending a PWM driver gating signal, the first processor does not receive the first signal within a second time threshold, the first processor determines that a communication fault occurs in the power supply system, and the first processor triggers the power supply system to be shut down and reports the fault.

In a possible embodiment, after the first processor stops sending a PWM driver gating signal to the power supply system based on the OCP signal, whether the first processor receives, within the second time threshold, the first signal sent by the second processor is determined. On a basis that the first processor does not receive the first signal within the second time threshold, the first processor determines that communication between the first processor and the second processor is interrupted. The first processor triggers the current power supply system to report the fault and be shut down and locked. The second time threshold may be preset as required.

It should be noted that FIG. 3 is a diagram of an example of the overcurrent protection circuit, and is not intended to limit the overcurrent protection circuit of the power supply system. In a possible example, in the overcurrent protection circuit shown in FIG. 3, there may be circuits such as a signal circuit or a filter circuit between the first sampling circuit and the OCP circuit, between the second sampling circuit and the second processor, and between the third sampling circuit and the second processor. In another possible example, the OCP circuit may be disposed on a circuit board in which the first processor is located. Alternatively, the OCP circuit may be disposed on a circuit board in which the first power circuit is located. Alternatively, the OCP circuit is disposed inside the first processor. When the OCP circuit is disposed inside the first processor, the first sampling circuit only needs to send a sampling signal to the first processor, and a circuit inside the first processor generates an OCP signal.

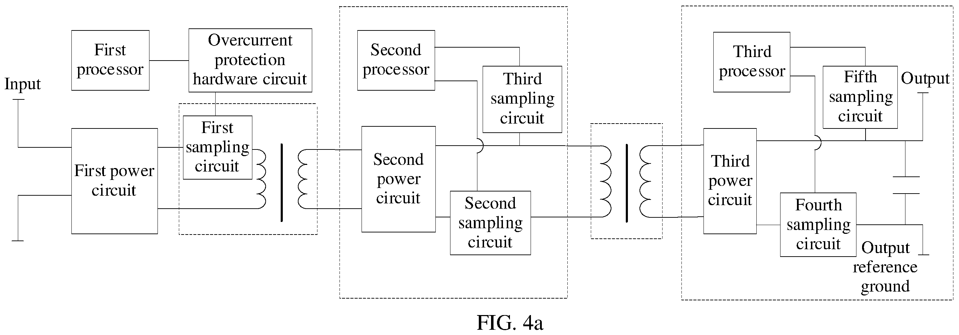

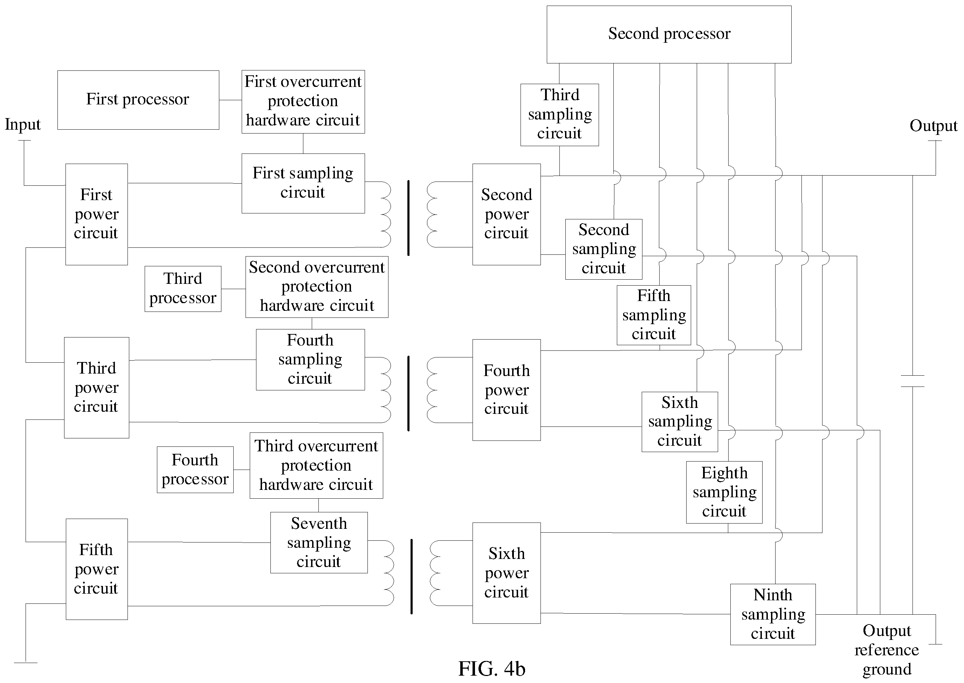

Further, in this embodiment of this application, a quantity of power circuits and a quantity of transformers in the power supply system are not limited, and a manner of connecting a plurality of power circuits and a plurality of transformers in the power supply system is not limited. In a possible example, three power circuits and two transformers are used as an example. A connection manner of the three power circuits and the two transformers may be shown in FIG. 4a. In another possible example, six power circuits and three transformers are used as an example. A connection manner of the six power circuits and the three transformers may be shown in FIG. 4b. Refer to FIG. 4b. A plurality of power circuits of primary sides (the input terminal of the power supply system) of a plurality of transformers are connected in series, and a plurality of power circuits of the output terminal of the power supply system are connected in parallel.

In this embodiment of this application of the present invention, a PWM driver gating signal is first stopped sending based on a current signal collected at the input terminal of the power supply system. Then, within a specific time interval, whether the power supply system continues to send a PWM driver gating signal or is shut down subsequently is determined based on the current signal and/or the voltage signal collected at the output terminal of the power supply system. In this way, in a scenario in which the communication delay between the primary side and the secondary side of the transformer is large, a fault in the power supply system can be effectively identified and protected. Further, in this embodiment of this application, winding short circuit faults of the primary side and the secondary side of the transformer and the short circuit/overcurrent fault of the output terminal of the power supply system share one OCP protection point. In other words, in this application of the present invention, only one OCP hardware circuit is required, so that when a fault occurs in the power supply system, a type of the fault can be identified, and corresponding protection can be performed. This improves reliability of the power supply system.

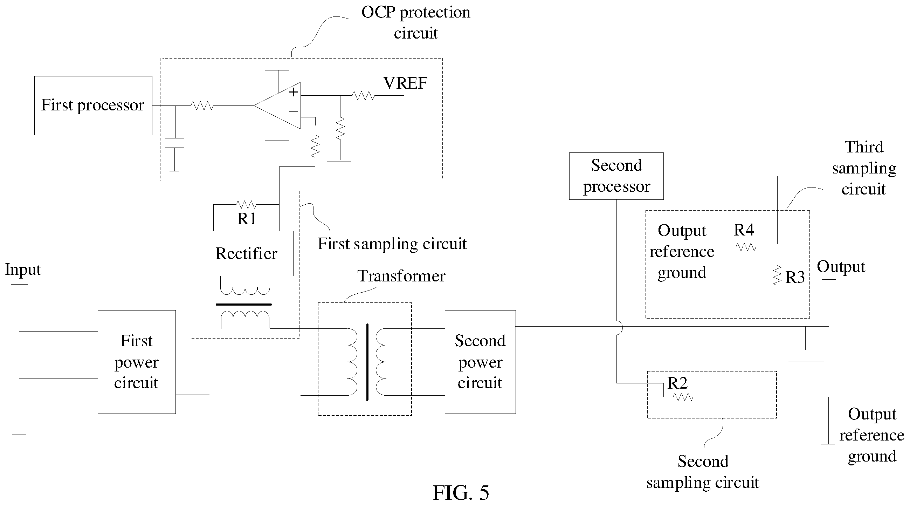

FIG. 5 is a schematic diagram of a circuit structure of a specific embodiment of the overcurrent protection circuit shown in FIG. 3. As shown in FIG. 5, the first sampling circuit includes a current transformer (Current Transformer, CT), a rectifier, and a first resistor R1. The current transformer obtains a current from a winding circuit of the primary side of the transformer. After passing through a rectifier circuit, a current at an output side of the current transformer flows through the first resistor R1. A voltage allocated to the first resistor R1 is a sampling signal of the first sampling unit. A resistance value of the first resistor R1 is adjusted, so that an amplitude of the sampling signal of the first sampling unit can be adjusted.

The OCP circuit includes a comparator, at least one resistor, and at least one capacitor. An inverting input terminal of the comparator in the OCP circuit is connected to an output terminal of the first sampling circuit. A comparison reference voltage value (an overcurrent protection threshold of the OCP circuit) of the OCP circuit is input to a co-directional input terminal of the comparator. An output terminal of the comparator is connected to the first processor. When a current output by the first sampling circuit is greater than the overcurrent protection threshold of the OCP circuit, the output terminal of the comparator outputs an OCP signal to the first processor. After receiving the OCP signal, the first processor triggers corresponding protection logic. In this embodiment of this application, after the first processor receives the OCP signal sent by the OCP circuit, the first processor determines that a fault occurs in the power supply system, and triggers the OCP circuit to stop sending a PWM driver gating signal to the power supply system.

The second sampling circuit collects a current signal at the output terminal of the power supply system in real time. The second sampling circuit includes a second resistor R2. The second resistor R2 is connected in series in a loop of the second power circuit. A resistance value of the second resistor R2 is adjusted, so that an amplitude of a sampling signal output by the second sampling unit can be adjusted.

The third sampling circuit collects a voltage signal at the output terminal of the power supply system in real time. The third sampling circuit includes a third resistor R3 and a fourth resistor R4. The third resistor R3 and the fourth resistor R4 are connected in series to perform voltage division. A voltage output by the second power circuit is divided, to output a sampling signal.

In a possible embodiment, a current signal at the primary side of the transformer collected by the first sampling circuit at a moment t1 exceeds the overcurrent protection threshold of the OCP circuit. The OCP circuit sends the OCP signal to the first processor, to enable the first processor to stop sending a PWM driver gating signal to the power supply system. The second sampling circuit and the third sampling circuit collect electrical signals at the output terminal of the power supply system in real time, and send a collected current value and a collected voltage value to the second processor. When the current value collected by the second sampling circuit is greater than or equal to a preset current threshold Ith, and the voltage value collected by the third sampling circuit is less than or equal to a preset voltage threshold Vth, the second processor sends the first signal to the first processor, and the first signal is transferred to the first processor at a moment t2. The first signal carries first information. The first information indicates that an output overcurrent or an output short circuit occurs at the output terminal of the power supply system. If the first processor receives the first signal within a time interval td, and the first signal carries the first information, the first processor triggers the power supply system to send a PWM driver gating signal again within a fixed time interval.

In a possible example, the time interval td at which the first processor receives the first signal is > t2-t1.

In this embodiment of this application of the present invention, when the current value obtained by the first sampling circuit is greater than the overcurrent protection threshold of the overcurrent protection hardware circuit, the first processor uses an overcurrent protection signal output by the OCP circuit as the first signal of indicating stopping sending a PWM driver gating signal. Then, the second processor outputs the first signal based on the second sampling signal and the third sampling signal, and sends, to the first processor, the first signal as a determining condition for subsequent sending of a PWM driver gating signal or shutdown. In other words, in embodiments of this application of the present invention, only one overcurrent protection hardware circuit needs to be disposed, so that when a fault occurs in the power supply system, a type of the fault can be identified, and corresponding protection can be performed. This improves reliability of the power supply system.

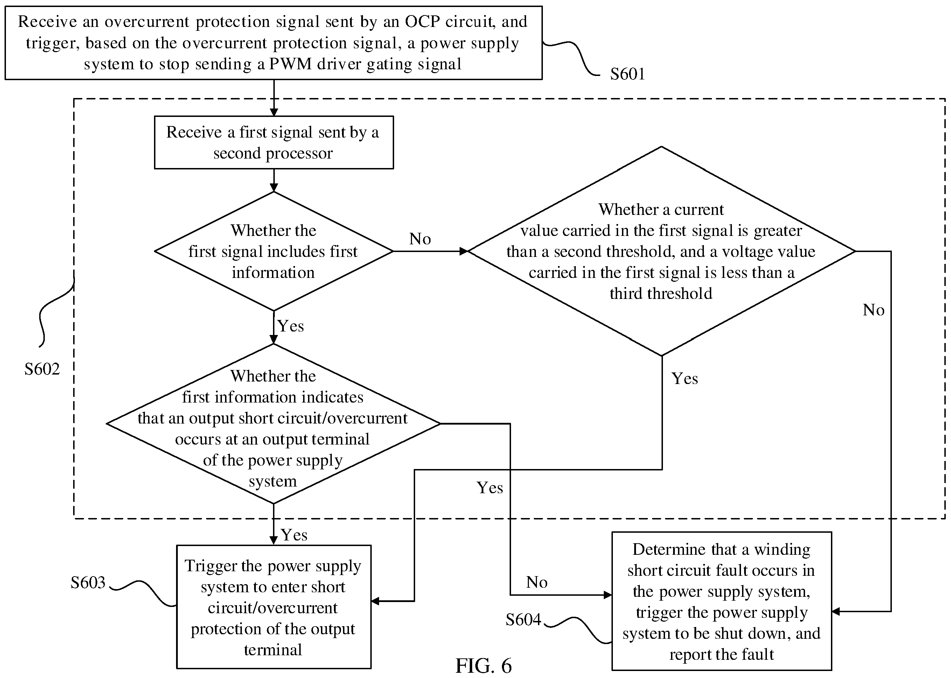

FIG. 6 is a flowchart of an overcurrent protection method for a power supply system according to an embodiment of this application of the present invention. The method is performed by the first processor in the circuit shown in FIG. 3 or FIG. 5. Refer to FIG. 6. The method includes step S601 to step S604.

Step S601: Receive an overcurrent protection signal sent by an OCP circuit, and trigger, based on the overcurrent protection signal, a power supply system to stop sending a PWM driver gating signal.

A first sampling circuit obtains a current signal at a primary side of a transformer in real time, and sends the collected current signal to the OCP circuit. The OCP circuit compares the current signal sent by the first sampling circuit with a preset OCP overcurrent protection threshold. When a current value collected by the first sampling circuit is greater than the preset OCP overcurrent protection threshold, the OCP circuit sends an overcurrent protection signal (OCP signal) to the first processor. After receiving the overcurrent protection signal, the first processor triggers, based on the overcurrent protection signal, the power supply system to stop sending a PWM driver gating signal. Stopping sending a PWM driver gating signal to the power supply system means that driving of a transistor in the power supply system is interrupted, and a transmission path of a power flow inside the power supply system is cut off.

Step S602: Receive a first signal sent by a second processor, and when the received first signal is within a first time threshold, determine, based on the first signal, whether to perform overcurrent protection on an output terminal of the power supply system.

In a possible example, it is preset that the second processor determines a signal collected by a sampling circuit of the output terminal. After receiving the first signal, the first processor determines first information carried in the first signal. When the first information carried in the first signal indicates that an output overcurrent or an output short circuit occurs at the output terminal of the power supply system, step S603 is performed. When the first information carried in the first signal indicates that the output overcurrent or the output short circuit does not occur at the output terminal of the power supply system, step S604 is performed.

In a possible example, it is preset that the first processor determines an electrical signal collected at the output terminal. After the first processor receives the first signal, the first processor determines a current value and a voltage value carried in the first signal. When the current value carried in the first signal is greater than or equal to a first threshold, and the voltage value carried in the first signal is less than or equal to a third threshold, step S603 is performed. Otherwise, step S604 is performed.

In a possible example, it is not preset that which processor determines the electrical signal collected at the output terminal. After receiving the first signal, the first processor first determines whether the first signal carries the first information. When the first signal carries the first information, and the first information indicates that the output overcurrent or the output short circuit occurs at the output terminal of the power supply system, step S603 is performed. When the first signal carries the first information, and the first information indicates that the output overcurrent or the output short circuit does not occur at the output terminal of the power supply system, step S604 is performed. Alternatively, when the first signal does not include the first information, the first processor determines the current value and the voltage value that are carried in the first signal. When the current value carried in the first signal is greater than or equal to the first threshold, and the voltage value carried in the first signal is less than or equal to the third threshold, step S603 is performed. Otherwise, step S604 is performed.

In a possible example, a current signal at the output terminal of the power supply system is obtained through a second sampling circuit, and a voltage signal at the output terminal of the power supply system is obtained through a third sampling circuit. Then, the second sampling circuit sends the obtained current signal and the third sampling circuit sends the obtained voltage signal to the second processor. The second processor compares the received current signal and the received voltage signal with a preset current threshold and a preset voltage threshold, and generates the first information. The first information indicates whether the output overcurrent or the output short circuit occurs at the output terminal of the power supply system. When a current value of a sampled current obtained by the second sampling circuit is greater than or equal to the preset current threshold, and a voltage value of a sampled voltage obtained by the third sampling circuit is less than or equal to the preset voltage threshold, the first information generated by the second processor indicates that the output overcurrent or the output short circuit occurs at the output terminal of the power supply system. Otherwise, the first information generated by the second processor indicates that the output overcurrent or the output short circuit does not occur at the output terminal of the power supply system. Then, the second processor sends the first signal to the first processor. The first signal carries a second sampling signal, a third sampling signal, and the first information.

In another possible example, after the second sampling circuit sends the obtained current signal and the third sampling circuit sends the obtained voltage signal to the second processor, the second processor directly sends, to the first processor, a current signal value obtained by the second sampling circuit and a voltage signal value obtained by the third sampling circuit as the first signal.

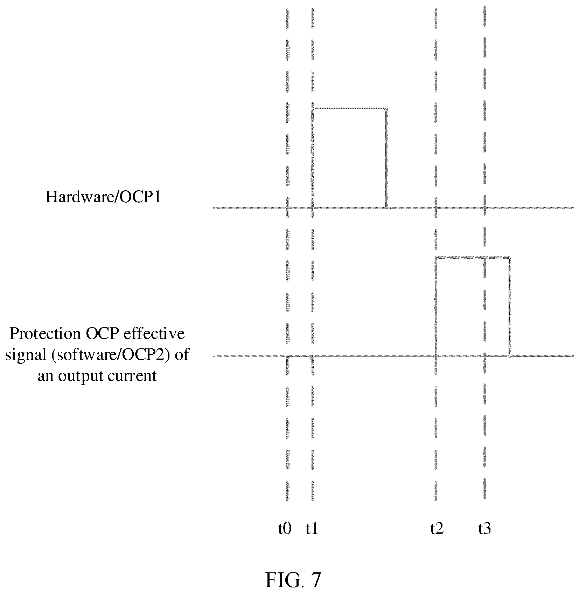

In a possible example, a diagram of a time sequence of an overcurrent protection solution of the power supply system shown in FIG. 6 is shown in FIG. 7. The first sampling circuit performs sampling at a moment t1. The first processor receives, at a moment t2, the first signal sent by the second processor. In this case, the first time threshold td is > t2-t1. In a possible example, if the first processor finds, at a moment t3, that communication between the first processor and the second processor is interrupted, the first processor triggers the power supply system to be shut down and report the fault, where t3 is > t1.

Step S603: The first processor triggers the power supply system to enter short circuit/overcurrent protection logic of the output terminal.

In a possible example, after the power supply system enters the output short circuit/overcurrent protection logic, the first processor triggers the power supply system to send a PWM driver gating signal for N times at a fixed time interval, where N is an integer greater than or equal to 1. If after each PWM driver gating signal is sent, the first processor can determine, based on the first signal received within the first time threshold, that the current value at the output terminal is greater than or equal to the preset current value, and the voltage value at the output terminal is less than or equal to the preset voltage value, the first processor determines that an output short circuit or overcurrent fault occurs at the output terminal of the power supply system, and the first processor triggers the power supply system to report the fault and be shut down and locked. If after a PWM driver gating signal is sent in a process of the N times of sending a PWM driver gating signal, the first processor determines, based on the received first signal, that the current value at the output terminal is less than the preset current value, or the voltage value at the output terminal is greater than the preset voltage value, the first processor determines that the winding short circuit fault occurs in the power supply system, and the first processor triggers the power supply system to be shut down and reports the fault. If after a PWM driver gating signal is sent in a process of the N times of sending a PWM driver gating signal, the first processor does not receive the first signal within a second time threshold, the first processor determines that a communication fault occurs in the power supply system, and the first processor triggers the power supply system to be shut down and reports the fault.

It should be noted that a determining logic for short circuit/overcurrent protection of the output terminal described in the foregoing example is merely a specific application scenario in embodiments of this application. In addition to the determining logic, there may be other determining logic. For example, the first processor triggers the power supply system to wait for a fixed time interval and then send a PWM driver gating signal, and triggers the power supply system to be shut down after sending the PWM driver gating signal for N times consecutively. A specific application scenario of the determining logic for short circuit/overcurrent protection of the output terminal is not limited in embodiments of this application of the present invention.

Step S604: Determine that a winding short circuit fault occurs in the power supply system, trigger the power supply system to be shut down, and report the fault.

In this embodiment of this application of the present invention, a PWM driver gating signal is first stopped sending based on the electrical signal collected by the first sampling circuit. Then, a type of a fault that occurs in the current power supply system is determined based on electrical signals collected by the second sampling circuit and the third sampling circuit. In this way, corresponding protection logic is triggered based on different fault types. In this embodiment of this application of the present invention, winding short circuit faults of a primary side and a secondary side of a transformer and the short circuit/overcurrent fault of the output terminal of the power supply system share one OCP protection point. In other words, in this application of the present invention, only one OCP hardware circuit is required, so that when a fault occurs in the power supply system, a type of the fault can be identified, and corresponding protection can be performed.

An embodiment of this application further provides a power conversion apparatus. The apparatus includes an overcurrent protection circuit. For a specific structure of the overcurrent protection circuit, refer to the foregoing embodiment. Further, because the power conversion apparatus in this embodiment of this application uses all the technical solutions of all embodiments of the foregoing overcurrent protection circuit, the power conversion apparatus has at least all beneficial effects brought by the technical solutions of embodiments of the overcurrent protection circuit. Details are not described herein again.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made based on the technical solutions of the present invention shall fall within the protection scope of the present invention.

## Claims

1. An overcurrent protection circuit of a power supply system, wherein the protection circuit comprises:
a transformer, wherein an input terminal of the transformer is connected to an input terminal of the power supply system through a first power circuit, and an output terminal of the transformer is connected to an output terminal of the power supply system through a second power circuit;
a first sampling circuit, configured to: collect a current signal at the input terminal of the transformer and output a first sampling signal;
an overcurrent protection hardware circuit, configured to: determine strength of the first sampling signal, and when the strength of the first sampling signal is greater than a first threshold, output an overcurrent protection signal;
a first processor, configured to trigger, based on the overcurrent protection signal, the power supply system to stop sending a PWM driver gating signal;
a second sampling circuit, configured to: collect an electrical signal at an output terminal of the second power circuit and output a second sampling signal; and
a second processor, configured to output a first signal, wherein the first signal comprises the second sampling signal; or configured to: determine strength of the second sampling signal and output a first signal, wherein the first signal comprises first information and the second sampling signal, and the first information indicates whether an output overcurrent occurs at the output terminal of the power supply system; and
after the power supply system stops sending a PWM driver gating signal, the first processor is further configured to receive the first signal, and when the received first signal is within a first time threshold, the first processor determines, based on the first signal, whether to perform overcurrent protection on the output terminal of the power supply system.

2. The circuit according to claim 1, wherein the second processor is configured to:
when the second sampling signal is a current value, and the current value is greater than or equal to a second threshold, generate the first information, wherein the first information indicates that the output overcurrent occurs at the output terminal of the power supply system, or when the second sampling signal is a voltage value, and the voltage value is less than or equal to a third threshold, generate the first information, wherein the first information indicates that the output overcurrent occurs at the output terminal of the power supply system; and
when the second sampling signal is a current value, and the current value is less than the second threshold, generate the first information, wherein the first information indicates that the output overcurrent does not occur at the output terminal of the power supply system, or when the second sampling signal is a voltage value, and the voltage value is greater than the third threshold, generate the first information, wherein the first information indicates that the output overcurrent does not occur at the output terminal of the power supply system.

3. The circuit according to claim 1 or 2, wherein determining, based on the first signal, whether to perform overcurrent protection on the output terminal of the power supply system comprises:
determining, based on the first information carried in the first signal, whether to perform overcurrent protection on the output terminal of the power supply system; or
determining, based on the signal strength of the second sampling signal carried in the first signal, whether to perform overcurrent protection on the output terminal of the power supply system.

4. The circuit according to claim 3, wherein the determining, based on the first information carried in the first signal, whether to perform overcurrent protection on the output terminal of the power supply system comprises:
when the first information carried in the first signal indicates that the output overcurrent occurs at the output terminal of the power supply system, performing, by the first processor, overcurrent protection on the output terminal of the power supply system; or
when the first information carried in the first signal indicates that the output overcurrent does not occur at the output terminal of the power supply system, determining, by the first processor, that a winding short circuit fault occurs in the power supply system, triggering the power supply system to be shut down, and reporting the fault.

5. The circuit according to claim 3, wherein the determining, based on the signal strength of the second sampling signal carried in the first signal, whether to perform overcurrent protection on the output terminal of the power supply system comprises:
determining, by the first processor, the second sampling signal, and when the second sampling signal is the current value, and the current value is greater than or equal to the second threshold, or when the second sampling signal is the voltage value, and the voltage value is less than or equal to the third threshold, performing, by the first processor, overcurrent protection on the output terminal of the power supply system; or
when the second sampling signal is the current value, and the current value is less than the second threshold, or when the second sampling signal is the voltage value, and the voltage value is greater than the third threshold, determining that a winding short circuit fault occurs in the power supply system, triggering the power supply system to be shut down, and reporting the fault.

6. The circuit according to claim 1 or 2, wherein determining, based on the first signal, whether to perform overcurrent protection on the output terminal of the power supply system comprises:
determining whether the first signal comprises the first information; and
on a basis that the first signal does not comprise the first information, determining, by the first processor based on the signal strength of the second sampling signal carried in the first signal, whether to perform overcurrent protection on the output terminal of the power supply system; or
on a basis that the first signal comprises the first information, and the first information indicates that the output overcurrent occurs at the output terminal of the power supply system, performing, by the first processor, overcurrent protection on the output terminal of the power supply system; or
on a basis that the first signal comprises the first information, and the first information indicates that the output overcurrent does not occur at the output terminal of the power supply system, determining, by the first processor, that a winding short circuit fault occurs in the power supply system, triggering the power supply system to be shut down, and reporting the fault.

7. The circuit according to claim 1, wherein the first processor is further configured to:
determine whether the first signal is received within a second time threshold; and
on a basis that the first processor does not receive the first signal within the second time threshold, determine, by the first processor, that a communication fault occurs in the power supply system, trigger the power supply system to be shut down, and report the fault.

8. The circuit according to claim 1, wherein the circuit further comprises a third sampling circuit, and when the second sampling circuit is a current sampling circuit, the third sampling circuit is a voltage sampling circuit; and
the third sampling circuit is configured to: collect a voltage at the output terminal of the second power circuit and output a third sampling signal.

9. The circuit according to claim 8, wherein the second processor is further configured to:
output the first signal based on the second sampling signal and the third sampling signal, wherein the first signal comprises the second sampling signal and the third sampling signal; or
determine the signal strength of the second sampling signal and signal strength of the third sampling signal, and output the first signal, wherein the first signal comprises the first information, the second sampling signal, and the third sampling signal, and the first information indicates whether the output overcurrent occurs at the output terminal of the power supply system; and when a current value collected by the second sampling circuit is greater than or equal to a second threshold, and a voltage value collected by the third sampling circuit is less than or equal to a third threshold, generate the first information, wherein the first information indicates that the output overcurrent occurs at the output terminal of the power supply system; when a current value collected by the second sampling circuit is less than a second threshold, generate the first information, wherein the first information indicates that the output overcurrent does not occur at the output terminal of the power supply system; or when a voltage value collected by the third sampling circuit is greater than a third threshold, generate the first information, wherein the first information indicates that the output overcurrent does not occur at the output terminal of the power supply system.

10. The circuit according to claim 1, wherein the transformer is an isolation transformer.

11. A power conversion apparatus, wherein the power conversion apparatus comprises a power supply and an overcurrent protection circuit, the overcurrent protection circuit is the protection circuit according to any one of claims 1 to 10, and the power supply is configured to supply power to the overcurrent protection circuit.
